# EUROPÄISCHE PATENTSCHRIFT

(11) **EP 3 642 514 B1**
(45) Veröffentlichungstag und Bekanntmachung des Hinweises auf die Patenterteilung: **14.07.2021**
(21) Anmeldenummer: 18732336.5
(22) Anmeldetag: 18.06.2018
(51) Int. Cl.: F16J 9/28

(54) **KOLBENRING, VERWENDUNG EINES KOLBENRINGS UND VERFAHREN ZUM HERSTELLEN EINES KOLBENRINGS**
PISTON RING, USE OF A PISTON RING AND METHOD FOR PRODUCING A PISTON RING
SEGMENT DE PISTON, UTILISATION D'UN SEGMENT DE PISTON ET PROCÉDÉ DE PRODUCTION D'UN SEGMENT DE PISTON

(30) Priorität: 19.06.2017 DE 102017113433
(43) Veröffentlichungstag der Anmeldung: 29.04.2020
(73) Patentinhaber: Deutsches Zentrum für Luft- und Raumfahrt e.V., 51147 Köln (DE)
(72) Erfinder: VIRSIK, Roman, 70197 Stuttgart (DE); KOCH, Dietmar, 71083 Herrenberg (DE); ORTELT, Markus, 74223 Flein (DE)
(74) Vertreter: Hoeger, Stellrecht & Partner Patentanwälte mbB
(86) Internationale Anmeldenummer: PCT/EP2018/066126
(87) Internationale Veröffentlichungsnummer: WO 2018/234244

(56) Entgegenhaltungen:
- DE-A1-102010 039 208
- US-A- 6 062 569

## Beschreibung

Die Erfindung betrifft einen Kolbenring, zum Beispiel für einen Kolben in einem Motor mit insbesondere innerer Verbrennung, beispielsweise in einem Freikolbenmotor einer Freikolbenvorrichtung.

Außerdem betrifft die Erfindung eine Verwendung eines Kolbenrings sowie ein Verfahren zum Herstellen eines Kolbenrings.

Ferner betrifft die Erfindung eine Kolbenmaschine, beispielsweise einen Motor, insbesondere einen Freikolbenmotor. Bei der Kolbenmaschine kann es sich alternativ um einen Kompressor handeln. Nachfolgend wird die Erfindung am Beispiel eines Kolbenrings in einem Motor erläutert. Diese Erläuterungen gelten jedoch entsprechend für einen Kolbenring in einem Kompressor.

Kolbenringe kommen in Motoren mit insbesondere innerer Verbrennung zum Abdichten des Brennraumes zum Einsatz. Bekannt ist es, Kolbenringe aus Stahl zu fertigen, die zur Steigerung der Widerstandsfähigkeit eine Beschichtung aufweisen können (PVD/CVD, Physical/Chemical Vapour Deposition). Andere Ansätze schlagen den Einsatz keramischer Werkstoffe vor, beispielsweise in der DE 10 2010 039 208 B4.

Aufgrund der Mischreibung verschleißen Kolbenringe und eine Kolbenaufnahme wie zum Beispiel eine Kolbenlaufbuchse im Betrieb mit derzeit gängigen Leichtlaufölen geringer Viskosität. Eine weitere Absenkung der Viskosität des Motoröls wäre wünschenswert, um die Lebensdauer des Motors zu steigern sowie um Brennstoff einzusparen und die Geräuschemission zu reduzieren. Idealerweise könnte die Ölschmierung teilweise abgeschaltet werden, zum Beispiel im Teillastbetrieb. Auch die eingangs genannten beschichteten Kolbenringe verschleißen im Laufe des Lebens des Motors aufgrund der in der Regel nur wenige Mikrometer dünnen Beschichtung.

Die US 6,062,569 beschreibt einen hitzebeständigen, thermisch stabilen und duktilen Kolbenring für einen Motor mit interner Verbrennung, wobei der Kolbenring zumindest teilweise aus einem faserverstärkten keramischen Matrix-material besteht (FRCMC).

Aufgabe der vorliegenden Erfindung ist es, einen Kolbenring mit erhöhter Widerstandsfähigkeit sowie ein Verfahren zum Herstellen eines derartigen Kolbenringes bereitzustellen. Aufgabe der Erfindung ist es auch, einen Motor mit einem derartigen Kolbenring und eine Verwendung eines Kolbenringes bereitzustellen.

Ein erfindungsgemäßer, die vorstehend genannte Aufgabe lösender Kolbenring ist ein Kolbenring aus einem Faserverbundwerkstoff mit Fasern und einer Matrix, wobei die Matrix Carbid und eine freie Kohlenstoffphase mit einem Anteil von mindestens ca. 5 % Vol. umfasst.

Die vorliegende Erfindung schlägt vor, dass der Kolbenring aus einem keramischen Faserverbundwerkstoff gefertigt ist. Es ist eine freie Kohlenstoffphase mit einem Volumenanteil von mindestens ca. 5 % (vorzugsweise weniger als ca. 30 % Vol. bis 40 % Vol.) vorgesehen, wodurch der Kolbenring selbst Schmiereigenschaften aufweist. Die Schmiereigenschaften des Motors werden dadurch unterstützt. Dies ist in allen Lastbereichen des Motors von Vorteil. Beispielsweise könnte im Teillastbetrieb die Ölschmierung abgeschaltet werden und/oder eine reine Trockenschmierung durch den Kolbenring sichergestellt werden. Die Schmierfähigkeit des Motors insgesamt wird gesteigert, was insbesondere in hochbelasteten Betriebspunkten wie Motorstart, Motorstopp oder Kolbenposition im oberen Totpunkt von Vorteil ist. Mit der Schmiereigenschaft des Kolbenrings kann die Viskosität des Motoröls gesenkt werden, um die Lebensdauer des Motors zu steigern, Brennstoff einzusparen oder die Geräuschemission zu reduzieren. Diese Vorteile bestehen insbesondere bei der bereits angesprochenen Trockenschmierung.

Der erfindungsgemäße Kolbenring weist durch die Fertigung aus einem Faserverbundwerkstoff zahlreiche Vorteile auf. Hierzu zählen insbesondere die hohe mechanische Stabilität, insbesondere aufgrund der Carbide, wodurch Delaminieren wirkungsvoll vermieden werden kann. Der Kolbenring weist eine hohe Temperaturstabilität auf und ist trotz der Schmiereigenschaften verschleißfest. Aufgrund der geringen Wärmeausdehnung des Faserverbundwerkstoffes eignet sich der Kolbenring zum Einsatz über einen großen Temperaturbereich und ist damit bei unterschiedlichen Motoren und Motorlasten einsetzbar.

Der Faserverbundwerkstoff umfasst Fasern und eine Matrix, wobei die Matrix aus einem Kohlenstoff-Precursor (kohlenstoffhaltiges Harz o. ä.) gebildet wird, in den die Fasern eingebettet sind. Die Fasern können mit dem Kohlenstoff-Precursor vorimprägniert sein (Pre-Preg) oder infiltriert (nachträglich imprägniert) werden. Der Kohlenstoff-Precursor mit den Fasern kann ausgehärtet werden, zum Beispiel durch Pressen und/oder Erhitzen. Durch anschließende Pyrolyse kann der Precursor carbonisiert und ein poröser endformnaher Körper mit kohlenstoffhaltiger Matrix gebildet werden, in den ein Carbidbildner eingebracht werden kann. Der Carbidbildner reagiert mit dem Kohlenstoff des porösen Körpers zu Carbid. Carbidbereiche können um Kohlenstoffanteile der Matrix herum gebildet sein.

Es besteht die Möglichkeit, die Eigenschaften des Kolbenrings gezielt durch die Carbidbildung zu beeinflussen, insbesondere kann die freie Kohlenstoffphase beeinflusst werden. Die Auswahl des Carbidbildners und die Auswahl des Faserwerkstoffs ermöglichen es ebenfalls, Einfluss auf mechanische Stabilität, Wärmeleitung und/oder Wärmeausdehnung des Kolbenrings zu nehmen.

Es können unterschiedliche Carbidbildner zum Einsatz kommen. Als vorteilhaft erweisen sich zum Beispiel Siliziumcarbid, Wolframcarbid oder Titancarbid.

Es kann vorgesehen sein, dass die freie Kohlenstoffphase einen Anteil von mehr als 5 % Vol. umfasst. Die Schmiereigenschaft des Kolbenrings wird dadurch verbessert.

Beispielsweise kann die freie Kohlenstoffphase einen Anteil von ca. 5 % Vol. bis ca. 25 % Vol. aufweisen, bei einer bevorzugten Ausführungsform vorzugsweise ca. 10 % Vol. bis ca. 20 % Vol.

Der Faserverbundwerkstoff ist aufgrund der in die Matrix eingebetteten Fasern mechanisch hoch belastbar. Die Fasern sind oder umfassen beispielsweise eines der Folgenden:
- Kohlenstofffasern;
- metallische Fasern, beispielsweise Wolframfasern oder Molybdänfasern, oder Fasern aus oder basierend auf einer Metalllegierung, beispielsweise einer Wolframlegierung oder einer Molybdänlegierung;
- oxidische Fasern, beispielsweise aus Aluminiumoxid oder Zirkonoxid;
- Fasern aus einem Carbidmaterial, beispielsweise aus Siliziumcarbid.

Bei einer vorteilhaften Ausführungsform des erfindungsgemäßen Kolbenrings ist der Faserverbundwerkstoff C/C-SiC. Zu dessen Bildung werden Kohlenstofffasern mit einem Kohlenstoff-Precursor vorimprägniert oder infiltriert und in Form gebracht. Das Faser-Matrix-Material wird ausgehärtet. "Aushärten" kann vorliegend insbesondere als Härten durch Pressen und/oder Temperatureinwirkung einschließlich der Pyrolyse zur Ausbildung eines porösen Körpers mit kohlenstoffhaltiger Matrix angesehen werden. Durch Silizieren mit flüssigem Silizium wird Siliziumcarbid gebildet, das zur Steigerung der mechanischen Belastbarkeit Bereiche um die freien Kohlenstoffanteile bildet.

Die Fasern können isotrop oder anisotrop im Kolbenring ausgerichtet sein. Durch die Ausrichtung der Fasern können insbesondere die mechanischen Eigenschaften des Kolbenrings angepasst werden.

Die Fasern sind beispielsweise, zumindest teilweise, folgendermaßen ausgerichtet, bezüglich einer Achse des Kolbenrings:
- axial ausgerichtet;
- radial ausgerichtet;
- entlang einer Umfangsrichtung des Kolbenrings.

Es kann vorgesehen sein, dass alle Fasern eine identische Ausrichtung aufweisen.

Eine vorteilhafte Ausführungsform des Kolbenrings kann Abschnitte aufweisen, die sich hinsichtlich der Orientierung der Fasern voneinander unterscheiden. Dies gibt die Möglichkeit, die mechanischen Eigenschaften des Kolbenrings gezielt anzupassen.

Der Kolbenring kann bei einer vorteilhaften Ausführungsform einteilig ausgestaltet sein.

Eine andersartige vorteilhafte Ausführungsform sieht vor, dass der Kolbenring mehrteilig ausgestaltet ist. Es können verschiedene aneinander gesetzte oder setzbare Segmente des Kolbenrings vorhanden sein, die beispielsweise formschlüssig aneinander angeordnet werden können.

Wie eingangs erwähnt, betrifft die vorliegende Erfindung auch eine Kolbenmaschine. Die Kolbenmaschine weist mindestens einen in einer Kolbenaufnahme hin- und herbeweglichen Kolben auf, an dem mindestens ein Kolbenring der vorstehend genannten Art angeordnet ist.

Eine vorteilhafte Ausführungsform der Kolbenmaschine kann ein Motor sein oder einen Motor umfassen, insbesondere ein(en) Freikolbenmotor. Der Kolben des Motors kann insbesondere ein Verbrennungskolben sein.

Bei einer andersartigen vorteilhaften Ausführungsform ist oder umfasst die Kolbenmaschine ein Kompressor.

Die vorliegende Erfindung bezieht sich auch auf eine Verwendung. Dabei wird ein Kolbenring der vorstehend genannten Art in einer Kolbenmaschine verwendet, beispielsweise einem Motor, insbesondere einem Freikolbenmotor einer Freikolbenvorrichtung.

Ein erfindungsgemäßes, die eingangs genannte Aufgabe lösendes Verfahren zur Herstellung eines Kolbenrings umfasst die folgenden Schritte:
- Bereitstellen eines vorzugsweise endformnahen porösen Körpers umfassend Fasern und eine kohlenstoffhaltige Matrix;
- Einbringen eines Carbidbildners und Bilden eines Faserverbundwerkstoffes mit Fasern und einer Matrix derart, dass die Matrix Carbid und eine freie Kohlenstoffphase mit einem Anteil von mindestens ca. 5 % Vol. umfasst.

Die Vorteile, die bereits im Zusammenhang mit der Erläuterung des erfindungsgemäßen Kolbenrings erwähnt wurden, können unter Einsatz des Verfahrens ebenfalls erzielt werden. Diesbezüglich kann auf die voranstehenden Ausführungen verwiesen werden.

Vorteilhafte Ausführungsbeispiele des erfindungsgemäßen Verfahrens, der erfindungsgemäßen Kolbenmaschine und der erfindungsgemäßen Verwendung ergeben sich durch vorteilhafte Ausführungsformen des erfindungsgemäßen Kolbenrings. Auch diesbezüglich kann auf die voranstehenden Ausführungen verwiesen werden.

Beim erfindungsgemäßen Verfahren wird ein poröser Körper bereitgestellt, der vorzugsweise eine endformnahe Gestalt aufweist. Der Körper besteht aus einem Faser-Matrix-Material, umfassend Fasern und eine vollständig oder zumindest teilweise aus Kohlenstoff bestehende Matrix. Die Matrix wird insbesondere durch Pyrolyse eines Matrixmaterials (Kohlenstoff-Precursors) gebildet.

Es kann vorgesehen sein, dass die Fasern beim Schritt des Bereitstellens mit Matrixmaterial vorimprägniert bereitgestellt werden oder dass die Fasern mit einem Matrixmaterial infiltriert werden.

Der Schritt des Bereitstellens kann bei einem vorteilhaften Ausführungsbeispiel folgende Schritte umfassen:
- Formen von mindestens einer Lage von Fasergewebe zu einem Mantel;
- Aushärten von vorimprägniertem oder infiltriertem, die Fasern einschließenden Matrixmaterial des Mantels;
- Unterteilen des Mantels axial zum Bereitstellen einer Mehrzahl von Ringen;
- Pyrolysieren zum Bilden des porösen Körpers mit kohlenstoffhaltiger Matrix;
- wobei der Schritt des Pyrolysierens vor oder nach dem Unterteilen des Mantels durchgeführt wird.

Bei diesem Ausführungsbeispiel kommt zum Beispiel ein flächig erstrecktes Fasergewebe zum Einsatz, von dem mindestens eine Lage verwendet werden kann. Es können mehrere übereinanderliegende Lagen von Fasergeweben eingesetzt werden. Die mindestens eine Lage kann in Mantelform gebracht und ausgehärtet werden. Der Mantel kann anschließend in eine Mehrzahl von Ringen unterteilt werden. Anschließend kann der poröse ringförmige Körper durch Pyrolyse gebildet werden, wobei die kohlenstoffhaltige Matrix entsteht. Alternativ kann die Pyrolyse vor dem Unterteilen des Mantels durchgeführt werden.

Indem die mindestens eine Lage von Fasergewebe in Mantelform gebracht wird, kann der Kolbenring axial orientierte und in Umfangsrichtung der Achse orientierte Fasern aufweisen.

Ein andersartiges vorteilhaftes Ausführungsbeispiel des Verfahrens sieht vor, dass der Schritt des Bereitstellens folgende Schritte umfasst:
- Anordnen von mindestens einer Lage eines Fasergewebes;
- trennende Bearbeitung der mindestens einen Lage zum Bilden eines Ringes mit in-plane-Orientierung der Fasern;
- Aushärten von vorimprägniertem oder infiltriertem, die Fasern einschließenden Matrixmaterial des Ringes einschließlich Pyrolysieren zum Bilden des porösen Körpers mit kohlenstoffhaltiger Matrix.

Dieses Ausführungsbeispiel sieht insbesondere vor, dass die mindestens eine Lage quer zur Ebene des Fasergewebes trennend bearbeitet wird, zum Beispiel durch Stanzen oder Schneiden. Die Fasern können dadurch eine in-plane Orientierung aufweisen, d.h. in einer Ebene quer zur Achse des Ringes. Beim Aushärten und Umsetzen des Matrixmaterials zu Kohlenstoff entsteht der poröse Körper mit kohlenstoffhaltiger Matrix.

Ein andersartiges vorteilhaftes Ausführungsbeispiel des Verfahrens sieht vor, dass der Schritt des Bereitstellens folgende Schritte umfasst:
- Spritzgießen eines Fasern einschließenden Matrixmaterials in Ringform;
- Aushärten des Matrixmaterials zum Bilden eines porösen Ringes.

Durch das Spritzgießen mit insbesondere isotrop verteilten Fasern besteht eine kostengünstige und einfache Möglichkeit zur Herstellung des Kolbenrings. Beim Aushärten des Matrixmaterials und Umsetzen des Matrixmaterials zu Kohlenstoff entsteht der poröse Körper mit kohlenstoffhaltiger Matrix.

Die nachfolgende Beschreibung vorteilhafter Ausführungsbeispiele der Erfindung dient im Zusammenhang mit der Zeichnung der näheren Erläuterung der Erfindung. Es zeigen:
- Figur 1:: eine schematische perspektivische Darstellung eines erfindungsgemäßen Kolbenrings;
- Figur 2:: eine schematische perspektivische Darstellung einer weiteren Ausführungsform;
- Figur 3:: schematisch eine Ausführungsform eines erfindungsgemäßen Kolbenrings und in Teilansichten von Fasern des Kolbenrings;
- Figur 4:: schematisch eine Lage eines Fasergewebes mit einander überkreuzenden Strängen von Fasern;
- Figur 5:: mehrere Lagen des Fasergewebes aus Figur 4;
- Figur 6:: eine schematische perspektivische Darstellung einer weiteren Ausführungsform des Kolbenrings;
- Figur 7:: eine Draufsicht auf den Kolbenring aus Figur 6;
- Figur 8:: eine schematische Darstellung einer weiteren Ausführungsform des Kolbenrings in schematischer Draufsicht;
- Figur 9 bis 11:: schematisch weitere Ausführungsformen des Kolbenrings, jeweils in Draufsicht;
- Figur 12:: eine perspektivische Darstellung einer Freikolbenvorrichtung, die eine erfindungsgemäße Kolbenmaschine umfasst, ausgestaltet als Motor, speziell als Freikolbenmotor; und

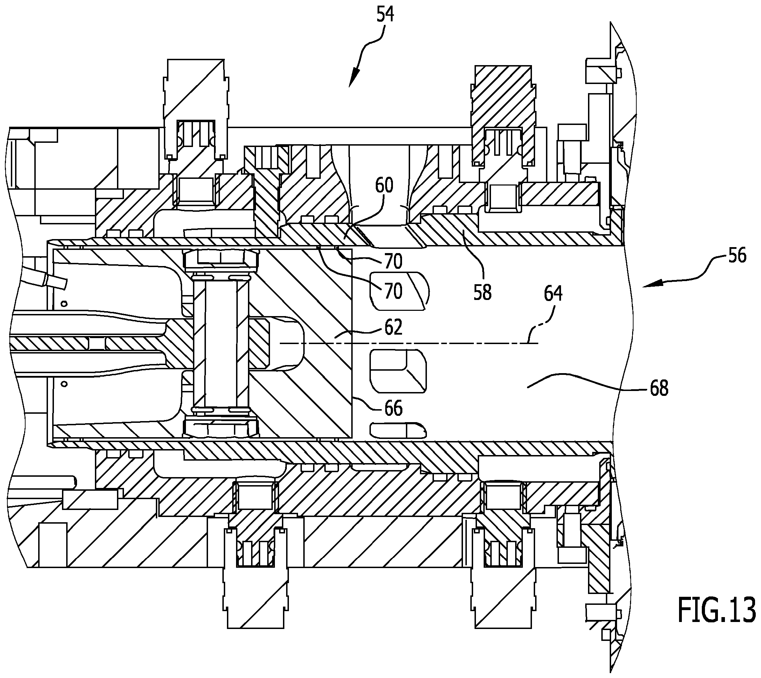

- Figur 13:: eine Schnittansicht des Freikolbenmotors in einer Teildarstellung.

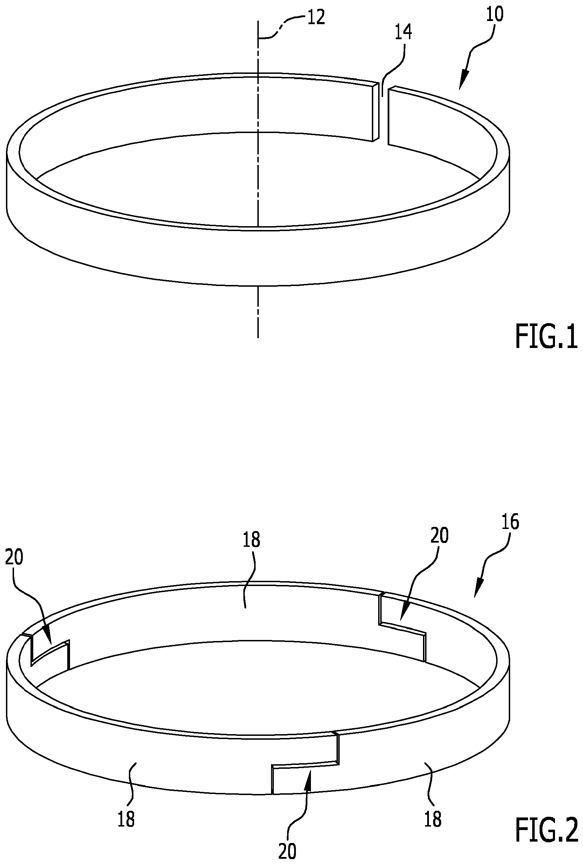

Figur 1 zeigt in schematischer Darstellung eine mit dem Bezugszeichen 10 belegte vorteilhafte Ausführungsform eines erfindungsgemäßen Kolbenrings. Der Kolbenring 10 definiert eine Achse 12. Dies gilt in entsprechender Weise für die nachfolgend erwähnten weiteren vorteilhaften Ausführungsformen des erfindungsgemäßen Kolbenrings.

Der Kolbenring 10 ist zur Verwendung an einem Kolben eines Motors mit insbesondere innerer Verbrennung vorgesehen.

Der Kolbenring 10 ist aus einem Faserverbundwerkstoff mit Fasern und einer Matrix gefertigt. Bei den Fasern handelt es sich vorliegend um Kohlenstofffasern. Die Matrix ist unter Einsatz eines Kohlenstoff-Precursors gebildet, mit dem die Fasern vorimprägniert sind oder infiltriert werden. Das Faser-Matrix-Material kann, beispielsweise wie nachfolgend erläutert, zur Bildung der Ringform in Form gebracht werden und zum Beispiel durch Temperatureinwirkung und/oder Pressen gehärtet werden. In einem anschließenden Pyrolyseschritt kann das Matrixmaterial carbonisiert werden, so dass ein poröser Körper mit kohlenstoffhaltiger Matrix bereitgestellt wird. In einem nachfolgenden Schritt kann ein Carbidbildner eingebracht werden und ein Carbid gebildet werden, wobei eine freie Kohlenstoffphase verbleibt.

Der Kolbenring 10 ist unter Einsatz von Silizium als Carbidbildner gebildet. Dabei kann beispielsweise flüssiges Silizium in den porösen Körper eindringen und mit Kohlenstoff zu Siliziumcarbid reagieren. Siliziumcarbid umgibt Kohlenstoffanteile zur Steigerung der mechanischen Belastbarkeit des Kolbenrings 10.

Im vorliegenden Fall ist der Faserverbundwerkstoff insbesondere C/C-SiC, mit Kohlenstofffasern und C-SiC-Matrix.

Der erfindungsgemäße Kolbenring 10 weist eine hohe mechanische Stabilität auf. Dabei ist er einerseits verschleißfest. Aufgrund einer freien Kohlenstoffphase von mindestens ca. 5 % Vol. und vorzugsweise höher weist der Kolbenring 10 allerdings Schmierungseigenschaften auf, so dass eine ölbasierte Schmierung des Motors unterstützt oder bevorzugt sogar ersetzt werden kann. Diesbezüglich kann auf die voranstehenden Ausführungen verwiesen werden.

Beispielsweise beträgt der Anteil der freien Kohlenstoffphase ungefähr ca. 5 % Vol. bis ca. 25 % Vol., bevorzugt ca. 10 % Vol. bis ca. 20 % Vol.

Der Kolbenring 10 ist einteilig ausgestaltet. Zur Erleichterung der Montage ist der Kolbenring 10 nicht geschlossen, stattdessen ist eine Durchbrechung 14 vorgesehen.

Andersartige Ausführungsformen des erfindungsgemäßen Kolbenrings können als Carbidbildner Wolframcarbid oder Titancarbid umfassen.

Anstelle von Kohlenstofffasern können bei andersartigen Ausführungsformen des erfindungsgemäßen Kolbenrings metallische Fasern oder Fasern aus einer oder basierend auf einer Metalllegierung vorhanden sein, beispielsweise Wolframfasern/Wolframlegierung oder Molybdänfasern/Molybdänlegierung. Alternativ oder ergänzend können oxidische Fasern vorgesehen sein, beispielsweise aus Aluminiumoxid oder Zirkonoxid. Alternativ oder ergänzend können Fasern aus einem Carbidmaterial vorgesehen sein, beispielsweise Siliziumcarbid.

Figur 2 zeigt eine weitere Ausführungsform, belegt mit dem Bezugszeichen 16. Der Kolbenring 16 ist mehrteilig ausgestaltet und weist vorliegend drei Segmente 18 auf, wobei auch eine andersartige Anzahl von Segmenten vorgesehen sein könnte.

Die Segmente 18 können im Wesentlichen formschlüssig aneinander gefügt sein, wobei sie im Bereich von Stößen 20 oder Fügestellen vorzugsweise einander überlappend gebildet sind.

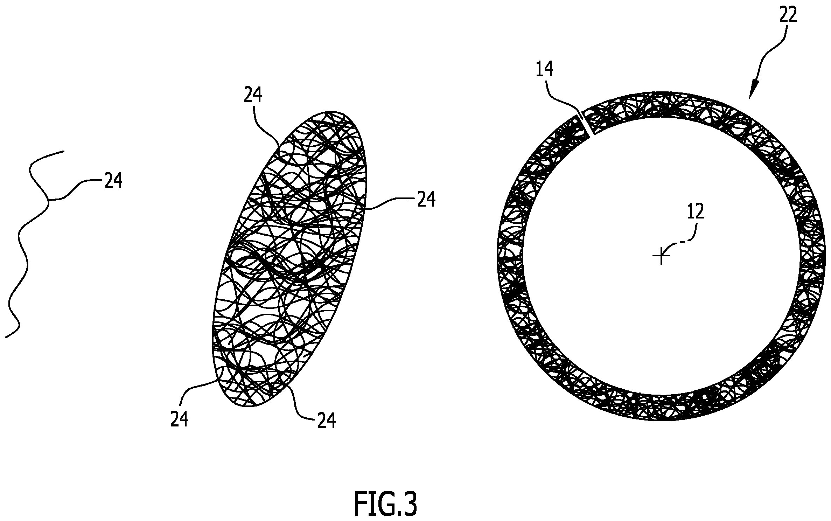

Figur 3 zeigt schematisch Einzelheiten eines mit dem Bezugszeichen 22 belegten Kolbenrings zur Erläuterung von dessen Herstellung.

Dabei symbolisiert die linke Darstellung in Figur 3 eine einzelne Faser 24 und die mittlere Darstellung eine Vielzahl von Fasern 24 mit vorzugsweise isotroper oder im Wesentlichen isotroper Orientierung. Die Fasern 24 sind mit einem Matrixmaterial (Kohlenstoff-Precursor) vorimprägniert, oder werden mit diesem infiltriert.

Das Faser-Matrix-Material kann vorzugsweise durch Spritzgießen in eine Form eingebracht werden und in die endformnahe Gestalt des Kolbenrings 22 gebracht werden. In einem nachfolgenden Schritt wird das Faser-Matrix-Material ausgehärtet, wobei insbesondere der Kohlenstoff-Precursor pyrolisiert und zu Kohlenstoff umgesetzt wird. Anschließend wird der Carbidbildner in den porösen Ring eingebracht und Kohlenstoff teilweise zu Carbid umgesetzt. Es ist eine freie Kohlenstoffphase von mindestens 5 % Vol. vorhanden.

Infolge der Orientierung der Fasern im Ausgangsmaterial sind die Fasern im Kolbenring 22 isotrop oder im Wesentlichen isotrop orientiert.

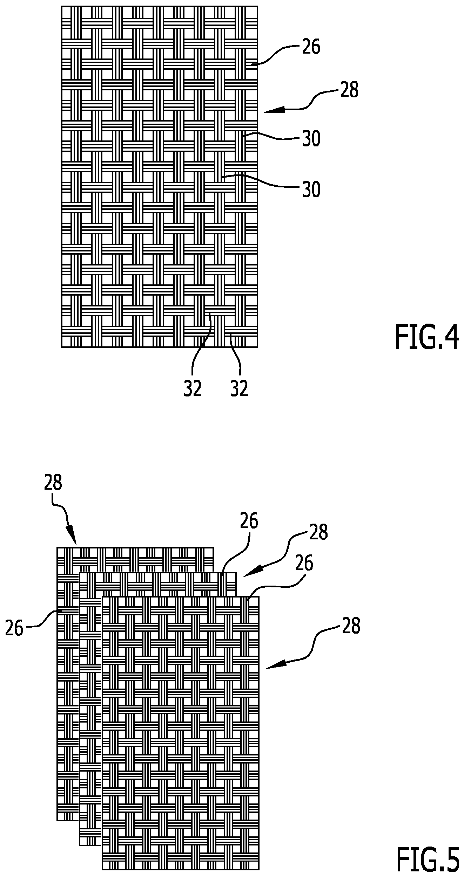

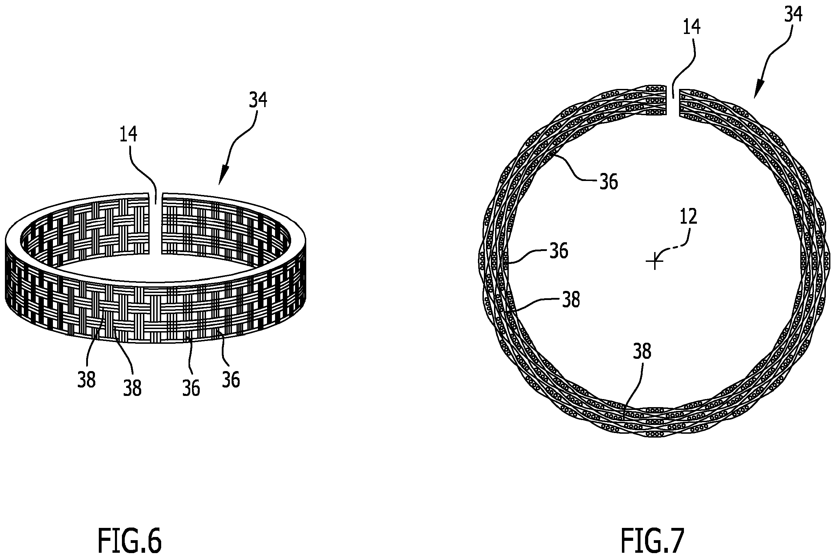

Figur 4 zeigt eine Lage 26 eines Fasergewebes 28, bei dem zwei unterschiedliche Arten von Strängen 30, 32 miteinander verwebt sind. Die Stränge 32 sind quer und insbesondere senkrecht zu den Strängen 30 ausgerichtet. Zur Fertigung einer in den Figuren 6 und 7 gezeigten Ausführungsform 34 eines erfindungsgemäßen Kolbenrings werden vorzugsweise eine Mehrzahl von übereinanderliegenden Lagen 26 bereitgestellt. Dies ist in Figur 5 beispielsweise anhand von drei Lagen 26 dargestellt, wobei auch eine andersartige Anzahl von Lagen zum Einsatz kommen könnte.

In einem nachfolgenden Verfahrensschritt werden die Lagen 26 des Fasergewebes 28 in eine Mantelform gebracht (selbst nicht dargestellt). Das Fasergewebe 28 kann mit dem Matrixmaterial (Kohlenstoff-Precursor) vorimprägniert sein oder mit diesem infiltriert werden. Das Faser-Matrix-Material kann gehärtet werden. Der Mantel kann anschließend axial in eine Mehrzahl von Ringen mit endformnaher Gestalt unterteilt werden.

Einzelne Ringe können einem Pyrolyseschritt unterzogen werden, so dass der Kohlenstoff-Precursor zu Kohlenstoff umgesetzt wird. Anschließend kann in einem weiteren Verfahrensschritt der Carbidbildner in die porösen Ringe eingebracht werden.

Alternativ kann vorgesehen sein, dass der Mantel als Ganzes dem Pyrolyseschritt unterzogen wird und der dabei entstehende poröse Körper anschließend axial in einzelne Ringe unterteilt wird. Die Carbidisierung erfolgt anschließend an den einzelnen Ringen.

Der Volumenanteil der freien Kohlenstoffphase kann beispielsweise über die Carbidisierung beeinflusst werden.

Durch Überführen der Lagen des Fasergewebes 28 in Mantelform und anschließendes Aushärten besteht insbesondere die Möglichkeit einer einfachen und kostengünstigen Herstellung einer Vielzahl von Kolbenringen.

Die Figuren 6 und 7 zeigen die Ausrichtung der Fasern beim Kolbenring 34. Zum einen sind axial verlaufende Fasern 36 vorhanden, zum Beispiel Fasern der Stränge 30. Zum anderen sind in Umfangsrichtung der Achse 12 verlaufende Fasern 38 vorhanden, gebildet von den Fasern der Stränge 32.

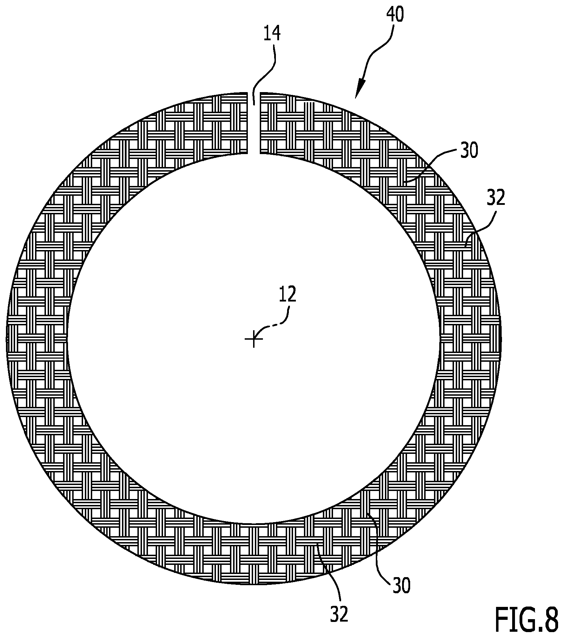

Figur 8 zeigt eine Draufsicht auf einen erfindungsgemäßen Kolbenring 40, hergestellt unter Einsatz einer oder mehrerer Lagen 26 des Fasergewebes 28. Dabei wird ein Ring aus dem Fasergewebe 28 getrennt, beispielsweise durch Stanzen oder Schneiden. Das Fasergewebe 28 kann mit Matrixmaterial vorimprägniert sein, oder der Ring wird mit dem Matrixmaterial imprägniert. Die Fasern der Stränge 30, 32 weisen dadurch eine in-plane Orientierung auf. Anschließend erfolgen das Aushärten/Pyrolisieren des Kohlenstoff-Precursors des die endformnahe Gestalt aufweisenden Ringes und das Carbidisieren des porösen Ringes.

Der Kolbenring 40 weist dadurch eine Orientierung von Fasern in einer Ebene senkrecht zur Achse 12 des Kolbenrings 40 auf.

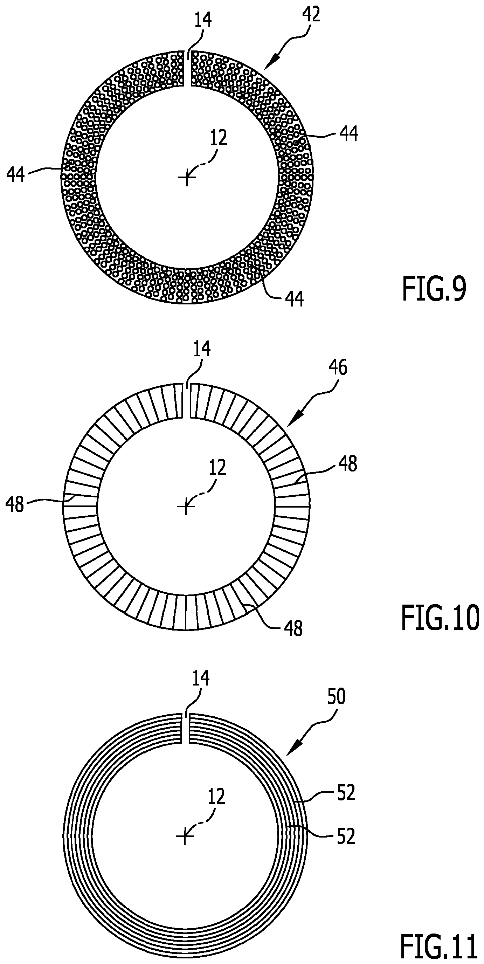

Die Figuren 9, 10 und 11 zeigen weitere Kolbenringe 42, 46 und 50 in einer Draufsicht. Die Kolbenringe 42, 46, 50 unterscheiden sich voneinander und von den bisherigen Ausführungsformen durch die Ausrichtung der Fasern.

Beim Kolbenring 42 gemäß Figur 9 sind Fasern 44 axial ausgerichtet.

Beim Kolbenring 46 gemäß Figur 10 sind Fasern 48 radial ausgerichtet.

Beim Kolbenring 50 gemäß Figur 11 sind Fasern 52 in Umfangsrichtung der Achse 12 ausgerichtet. Die Fasern 52 sind als Endlosfasern dargestellt, sie können in Umfangsrichtung unterbrochen sein oder nur einen beschränkten Winkelumfang überstreichen.

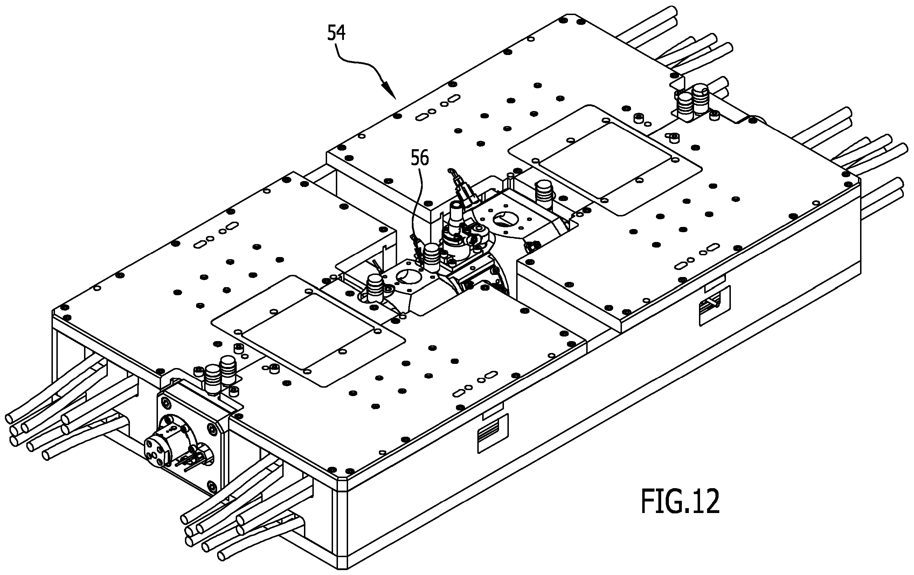

Figur 12 zeigt in einer perspektivischen Darstellung eine mit dem Bezugszeichen 54 belegte vorteilhafte Ausführungsform einer Freikolbenvorrichtung. Die Freikolbenvorrichtung 54 ist beispielsweise wie in der nicht-vorveröffentlichten Patentanmeldung DE 10 2016 109 029.8 derselben Anmelderin beschrieben ausgestaltet.

Die Freikolbenvorrichtung 54 umfasst einen Freikolbenmotor 56, bei dem es sich um eine vorteilhafte Ausführungsform einer erfindungsgemäßen Kolbenmaschine handelt. Der Freikolbenmotor 56 umfasst eine Kolbenaufnahme 58, die eine Kolbenlaufbuchse 60 ausbildet.

In der Kolbenaufnahme 58 ist ein Verbrennungskolben 62 aufgenommen, an dem mindestens ein erfindungsgemäßer Kolbenring angeordnet ist.

Der Verbrennungskolben 62 ist längs einer Achse 64 der Kolbenaufnahme 58 hin- und herbeweglich und begrenzt mit einer Kolbenfläche 66 einen Verbrennungsraum 68. Im Verbrennungsraum 68 kann ein Brennstoff-Luft-Gemisch unter Expansion gezündet werden, wodurch der Verbrennungskolben 62 bewegt wird.

Der mindestens eine Kolbenring (vorliegend sind zwei Kolbenringe 70 schematisch dargestellt) dichtet den Verbrennungsraum 68 in Umfangsrichtung des Verbrennungskolbens 62.

### Bezugszeichenliste:

- 10, 16, 22, 34, 40, 42, 46, 50, 70: Kolbenring
- 12: Achse
- 14: Durchbrechung
- 18: Segment
- 20: Stoß
- 24, 36, 38, 44, 48, 52: Faser
- 26: Lage
- 28: Fasergewebe
- 30, 32: Strang
- 54: Freikolbenvorrichtung
- 56: Freikolbenmotor
- 58: Kolbenaufnahme
- 60: Kolbenlaufbuchse
- 62: Verbrennungskolben
- 64: Achse
- 66: Kolbenfläche
- 68: Verbrennungsraum

## Patentansprüche

1. Kolbenring aus einem Faserverbundwerkstoff mit Fasern und einer Matrix, wobei die Matrix Carbid und eine freie Kohlenstoffphase mit einem Anteil von mindestens ca. 5 % Vol. umfasst.

2. Kolbenring nach Anspruch 1, **dadurch gekennzeichnet, dass** die Matrix Siliziumcarbid, Wolframcarbid oder Titancarbid umfasst und/oder **gekennzeichnet durch** eine freie Kohlenstoffphase mit einem Anteil von mehr als 5 % Vol.

3. Kolbenring nach einem der voranstehenden Ansprüche, **gekennzeichnet durch** eine freie Kohlenstoffphase mit einem Anteil von ca. 5 % Vol. bis ca. 25 % Vol., bevorzugt von ca. 10 % Vol. bis ca. 20 % Vol.

4. Kolbenring nach einem der voranstehenden Ansprüche, **dadurch gekennzeichnet, dass** die Fasern (24, 36, 38, 44, 48, 52) eines der Folgenden sind oder umfassen:
- Kohlenstofffasern;
- metallische Fasern, beispielsweise Wolframfasern oder Molybdänfasern, oder Fasern aus oder basierend auf einer Metalllegierung, beispielsweise einer Wolframlegierung oder einer Molybdänlegierung;
- oxidische Fasern, beispielsweise aus Aluminiumoxid oder Zirkonoxid;
- Fasern aus einem Carbidmaterial, beispielsweise Siliziumcarbid.

5. Kolbenring nach einem der voranstehenden Ansprüche, **dadurch gekennzeichnet, dass** der Faserverbundwerkstoff C/C-SiC ist und/oder dass die Fasern (24, 36, 38, 44, 48, 52) isotrop oder anisotrop ausgerichtet sind.

6. Kolbenring nach einem der voranstehenden Ansprüche, **dadurch gekennzeichnet, dass** die Fasern (24, 36, 38, 44, 48, 52), zumindest teilweise, folgendermaßen ausgerichtet sind, bezüglich einer Achse des Kolbenrings (10; 16; 22; 34; 40; 42; 46; 50; 70):
- axial ausgerichtet;
- radial ausgerichtet;
- entlang einer Umfangsrichtung des Kolbenrings.

7. Kolbenring nach einem der voranstehenden Ansprüche, **dadurch gekennzeichnet, dass** zumindest eines der Folgenden gilt:
- der Kolbenring (10; 16; 22; 34; 40; 42; 46; 50; 70) weist Abschnitte auf, die sich hinsichtlich der Orientierung der Fasern (24, 36, 38, 44, 48, 52) voneinander unterscheiden;
- der Kolbenring (10; 16; 22; 34; 40; 42; 46; 50; 70) ist einteilig ausgestaltet oder mehrteilig ausgestaltet.

8. Kolbenmaschine, umfassend mindestens einen in einer Kolbenaufnahme (58) hin- und herbeweglichen Kolben (62), an dem mindestens ein Kolbenring (10; 16; 22; 34; 40; 42; 46; 50; 70) nach einem der voranstehenden Ansprüche angeordnet ist.

9. Kolbenmaschine nach Anspruch 8, **dadurch gekennzeichnet, dass** die Kolbenmaschine ein(en) Motor ist oder umfasst, insbesondere ein Freikolbenmotor, oder dass die Kolbenmaschine ein Kompressor ist oder einen solchen umfasst.

10. Verwendung eines Kolbenringes (10; 16; 22; 34; 40; 42; 46; 50; 70) nach einem der Ansprüche 1 bis 7 in einer Kolbenmaschine, beispielsweise einem Motor, insbesondere einem Freikolbenmotor (56) einer Freikolbenvorrichtung.

11. Verfahren zur Herstellung eines Kolbenrings, umfassend:
- Bereitstellen eines vorzugsweise endformnahen porösen Körpers umfassend Fasern und eine kohlenstoffhaltige Matrix;
- Einbringen eines Carbidbildners in den porösen Körper und Bilden eines Faserverbundwerkstoffes mit Fasern und einer Matrix derart, dass die Matrix Carbid und eine freie Kohlenstoffphase mit einem Anteil von mindestens ca. 5 % Vol. umfasst.

12. Verfahren nach Anspruch 11, **dadurch gekennzeichnet, dass** die Fasern beim Schritt des Bereitstellens mit Matrixmaterial vorimprägniert bereitgestellt werden oder dass die Fasern mit einem Matrixmaterial infiltriert werden.

13. Verfahren nach Anspruch 11 oder 12, **dadurch gekennzeichnet, dass** der Schritt des Bereitstellens umfasst:
- Formen von mindestens einer Lage von Fasergewebe zu einem Mantel;
- Aushärten von vorimprägniertem oder infiltriertem, die Fasern einschließenden Matrixmaterial des Mantels;
- Unterteilen des Mantels axial zum Bereitstellen einer Mehrzahl von Ringen;
- Pyrolysieren zum Bilden des porösen Körpers mit kohlenstoffhaltiger Matrix;
- wobei der Schritt des Pyrolysierens vor oder nach dem Unterteilen des Mantels durchgeführt wird.

14. Verfahren nach Anspruch 11 oder 12, **dadurch gekennzeichnet, dass** der Schritt des Bereitstellens umfasst:
- Anordnen von mindestens einer Lage eines Fasergewebes;
- trennende Bearbeitung der mindestens einen Lage zum Bilden eines Ringes mit in-plane-Orientierung der Fasern;
- Aushärten von vorimprägniertem oder infiltriertem, die Fasern einschließenden Matrixmaterial des Ringes einschließlich Pyrolysieren zum Bilden des porösen Körpers mit kohlenstoffhaltiger Matrix.

15. Verfahren nach Anspruch 11 oder 12, **dadurch gekennzeichnet, dass** der Schritt des Bereitstellens umfasst:
- Spritzgießen eines Fasern einschließenden Matrixmaterials in Ringform;
- Aushärten des Matrixmaterials zum Bilden eines porösen Ringes.

## Claims

1. Piston ring made of a fiber composite material with fibers and a matrix, wherein the matrix comprises carbide and a free carbon phase with a proportion of at least about 5% by volume.

2. Piston ring in accordance with Claim 1, **characterized in that** the matrix comprises silicon carbide, tungsten carbide or titanium carbide and/or **characterized by** a free carbon phase with a proportion of more than 5% by volume.

3. Piston ring in accordance with any one of the preceding Claims, **characterized by** a free carbon phase with a proportion of about 5% by volume to about 25% by volume, preferably about 10% by volume to about 20% by volume.

4. Piston ring in accordance with any one of the preceding Claims, **characterized in that** the fibers (24, 36, 38, 44, 48, 52) are or comprise one of the following:
- carbon fibers;
- metallic fibers, for example tungsten fibers or molybdenum fibers, or fibers made of or based on a metal alloy, for example a tungsten alloy or a molybdenum alloy;
- oxidic fibers, for example made of aluminum oxide or zirconium oxide;
- fibers made of a carbide material, for example silicon carbide.

5. Piston ring in accordance with any one of the preceding Claims, **characterized in that** the fiber composite material is C/C-SiC and/or **in that** the fibers (24, 36, 38, 44, 48, 52) are oriented isotropically or anisotropically.

6. Piston ring in accordance with any one of the preceding Claims, **characterized in that** the fibers (24, 36, 38, 44, 48, 52) are oriented, at least partially, in the following way, with respect to an axis of the piston ring (10; 16; 22; 34; 40; 42; 46; 50; 70):
- oriented axially;
- oriented radially;
- along a circumferential direction of the piston ring.

7. Piston ring in accordance with any one of the preceding Claims, **characterized in that** at least one of the following applies:
- the piston ring (10; 16; 22; 34; 40; 42; 46; 50; 70) has portions that differ from one another with regard to the orientation of the fibers (24, 36, 38, 44, 48, 52);
- the piston ring (10; 16; 22; 34; 40; 42; 46; 50; 70) is configured as one part or configured as multiple parts.

8. Piston machine, comprising at least one piston (62) which is reciprocable in a piston receptacle (58) and on which at least one piston ring (10; 16; 22; 34; 40; 42; 46; 50; 70) in accordance with any one of the preceding Claims is arranged.

9. Piston machine in accordance with Claim 8, **characterized in that** the piston machine is or comprises an engine, in particular a free piston engine, or **in that** the piston machine is or comprises a compressor.

10. Use of a piston ring (10; 16; 22; 34; 40; 42; 46; 50; 70) in accordance with any one of Claims 1 to 7 in a piston machine, for example an engine, in particular a free piston engine (56) of a free piston device.

11. Method for producing a piston ring, comprising:
- providing a, preferably near-net-shaped, porous body comprising fibers and a carbonaceous matrix;
- introducing a carbide former into the porous body and forming a fiber composite material with fibers and a matrix in such a way that the matrix comprises carbide and a free carbon phase with a proportion of at least about 5% by volume.

12. Method in accordance with Claim 11, **characterized in that** during the step of provision, the fibers are provided preimpregnated with matrix material, or **in that** the fibers are infiltrated with a matrix material.

13. Method in accordance with Claim 11 or 12, **characterized in that** the step of provision comprises:
- forming at least one layer of fiber woven fabric to a jacket;
- curing preimpregnated or infiltrated matrix material of the jacket enclosing the fibers;
- subdividing the jacket axially to provide a plurality of rings;
- pyrolyzing to form the porous body with a carbonaceous matrix;
- wherein the step of pyrolyzation is performed before or after the subdivision of the jacket.

14. Method in accordance with Claim 11 or 12, **characterized in that** the step of provision comprises:
- arranging at least one layer of a fiber woven fabric;
- separatively machining the at least one layer to form a ring with in-plane orientation of the fibers;
- curing preimpregnated or infiltrated matrix material of the ring enclosing the fibers, including pyrolyzing to form the porous body with a carbonaceous matrix.

15. Method in accordance with Claim 11 or 12, **characterized in that** the step of provision comprises:
- injection molding a matrix material enclosing fibers in a ring shape;
- curing the matrix material to form a porous ring.

## Revendications

1. Bague de piston en un matériau composite fibreux avec des fibres et une matrice, dans laquelle la matrice comprend un carbure et une phase carbone libre avec une teneur d'au moins environ 5 % en volume.

2. Bague de piston selon la revendication 1, **caractérisée en ce que** la matrice comprend du carbure de silicium, du carbure de tungstène ou du carbure de titane, et/ou **caractérisée par** une phase carbone libre avec une teneur supérieure à 5 % en volume.

3. Bague de piston selon l'une des revendications précédentes, **caractérisée par** une phase carbone libre avec une teneur d'environ 5 % en volume à environ 25 % en volume, de préférence d'environ 10 % en volume à environ 20 % en volume.

4. Bague de piston selon l'une des revendications précédentes, **caractérisée en ce que** les fibres (24, 36, 38, 44, 48, 52) sont ou comprennent l'une parmi ce qui suit :
- des fibres de carbone ;
- des fibres métalliques, par exemple des fibres de tungstène ou des fibres de molybdène, ou des fibres en ou basées sur un alliage métallique, par exemple un alliage de tungstène ou un alliage de molybdène ;
- des fibres oxydiques, par exemple en oxyde d'aluminium ou en oxyde de zirconium ;
- des fibres en un matériau en carbure, par exemple un carbure de silicium.

5. Bague de piston selon l'une des revendications précédentes, **caractérisée en ce que** le matériau composite fibreux est un C/C-SiC et/ou **en ce que** les fibres (24, 36, 38, 44, 48, 52) sont orientées de façon isotrope ou anisotrope.

6. Bague de piston selon l'une des revendications précédentes, **caractérisée en ce que** les fibres (24, 36, 38, 44, 48, 52) sont, au moins partiellement, orientées de la façon suivante, par rapport à un axe de la bague de piston (10 ; 16 ; 22 ; 34 ; 40 ; 42 ; 46 ; 50 ; 70) :
- orientées axialement ;
- orientées radialement ;
- dans une direction circonférentielle de la bague de piston.

7. Bague de piston selon l'une des revendications précédentes, **caractérisée en ce qu'**au moins l'une des situations suivantes est valable :
- la bague de piston (10 ; 16 ; 22 ; 34 ; 40 ; 42 ; 46 ; 50 ; 70) présente des sections qui se différencient les unes des autres quant à l'orientation des fibres (24, 36, 38, 44, 48, 52) ;
- la bague de piston (10 ; 16 ; 22 ; 34 ; 40 ; 42 ; 46 ; 50 ; 70) est conçue en une seule pièce ou conçue en plusieurs pièces.

8. Machine à pistons, comprenant au moins un piston (62) mobile en va-et-vient dans un logement de piston (58), contre lequel est agencée au moins une bague de piston (10 ; 16 ; 22 ; 34 ; 40 ; 42 ; 46 ; 50 ; 70) selon l'une des revendications précédentes.

9. Machine à pistons selon la revendication 8, **caractérisée en ce que** la machine à pistons est ou comprend un moteur, en particulier un moteur à pistons libres, ou **en ce que** la machine à pistons est un compresseur ou comprend un tel compresseur.

10. Utilisation d'une bague de piston (10 ; 16 ; 22 ; 34 ; 40 ; 42 ; 46 ; 50 ; 70) selon l'une des revendications 1 à 7 dans une machine à pistons, par exemple un moteur, en particulier un moteur à pistons libres (56) d'un dispositif de pistons libres.

11. Procédé de fabrication d'une bague de piston, comprenant :
- la mise à disposition d'un corps poreux de préférence proche de sa forme finale, lequel comprend des fibres et une matrice contenant un carbone ;
- l'introduction d'une substance formant un carbure dans le corps poreux et la formation d'un matériau composite fibreux avec des fibres et une matrice, de sorte que la matrice comprenne un carbure et une phase carbone libre avec une teneur d'au moins environ 5 % en volume.

12. Procédé selon la revendication 11, **caractérisé en ce que** les fibres, lors de l'étape de mise à disposition, sont mises à disposition en étant pré-imprégnées avec un matériau de matrice ou **en ce que** les fibres sont infiltrées avec un matériau de matrice.

13. Procédé selon la revendication 11 ou 12, **caractérisé en ce que** l'étape de mise à disposition comprend :
- la formation d'au moins une couche de tissu de fibres en tant que gaine ;
- le durcissement d'un matériau de matrice de la gaine, lequel est pré-imprégné ou infiltré et englobe les fibres ;
- la subdivision de la gaine axialement à la mise à disposition d'une pluralité de bagues ;
- la pyrolyse pour former le corps poreux avec une matrice contenant un carbone ;
- dans lequel l'étape de pyrolyse est réalisée avant ou après la subdivision de la gaine.

14. Procédé selon la revendication 11 ou 12, **caractérisé en ce que** l'étape de mise à disposition comprend :
- l'agencement d'au moins une couche d'un tissu de fibres ;
- le traitement par coupage de la au moins une couche pour former une bague avec une orientation dans le plan des fibres ;
- le durcissement d'un matériau de matrice de la bague, lequel est pré-imprégné ou infiltré et englobe les fibres, y compris la pyrolyse pour former le corps poreux avec une matrice contenant un carbone.

15. Procédé selon la revendication 11 ou 12, **caractérisé en ce que** l'étape de mise à disposition comprend :
- le moulage par injection d'un matériau de matrice englobant des fibres pour former une bague ;
- le durcissement du matériau pour former une bague poreuse.
